# EUROPEAN PATENT APPLICATION

(11) **EP 1 628 154 A1**
(43) Date of publication of application: **22.02.2006**
(21) Application number: 04734340.5
(22) Date of filing: 21.05.2004
(51) Int. Cl.: G02B 26/08

(54) **OPTICAL SWITCH**

(30) Priority: 21.05.2003 JP 2003144191
(71) Applicant: OMRON CORPORATION, Kyoto-shi, Kyoto 600-8530 (JP)
(72) Inventor: YAMAMOTO, R., C/O OMRON CORPORATION, Kyoto, 60082530 (JP); TANAKA, Hirokazu, C/O OMRON CORPORATION, Kyoto 6008530 (JP); ONISHI, Masayasu, C/O OMRON CORPORATION, Kyoto 6008530 (JP); NAKANISHI, Yoichi, C/O OMRON CORPORATION, Kyoto 6008530 (JP); KAWAMOTO, Ryuji, C/O OMRON CORPORATION, Kyoto 6008530 (JP); SUZUKI, Yuichi, C/O OMRON CORPORATION, Kyoto 6008530 (JP)
(74) Representative: Kilian, Helmut
(86) International application number: PCT/JP2004/006931
(87) International publication number: WO 2004/104672

(57) **Abstract**

optical fibers and a preliminary optical fiber arranged in parallel to one another and output side optical fibers arranged in parallel to one another are arranged in two stages, and a fixed prism 14 is arranged to be opposite to end surfaces of these. A preliminary optical fiber prism 15b is provided on one oblique surface of the fixed prism 14 to be opposite to a preliminary optical fiber 20, and a driven prism 15a can be made to come in contact with and separated from the one oblique surface of the fixed prism 14, and the driven prism 15a can be moved along the input side optical fibers. At a position where the driven prism 15a comes in contact with the oblique surface of the fixed prism 14, outgoing light from the input side optical fiber is not totally reflected at the oblique surface of the fixed prism 14, but is incident on the driven prism 15a, and after it is sent from the driven prism 15a to the preliminary optical fiber prism 15b, it is incident on the preliminary optical fiber 20 from the preliminary optical fiber prism 15b.

## Description

### [Technical Field to Which the Invention Belongs]

The present invention relates to an optical switch, and particularly to an optical switch used as an optical communication device.

### [Background Art]

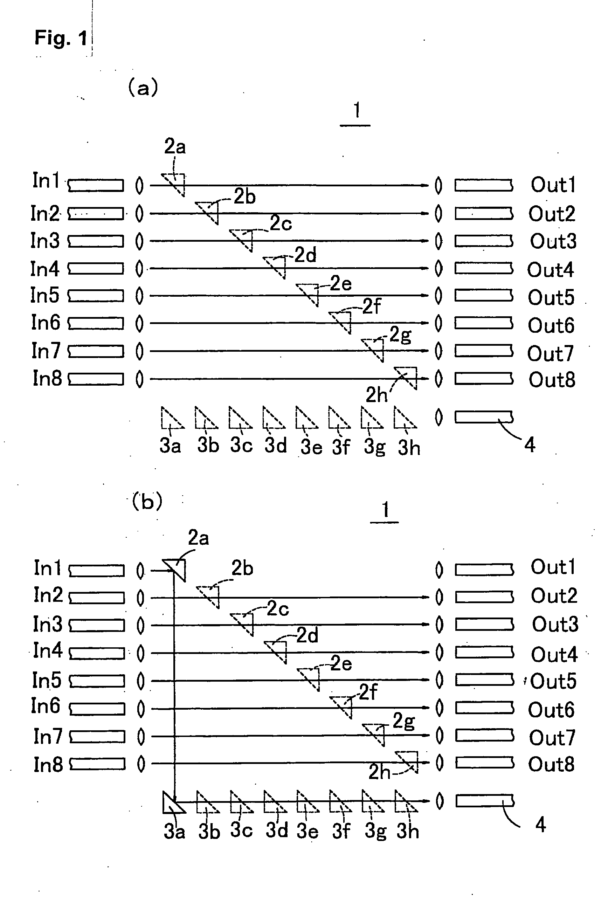

The principle of a conventional redundant optical switch (8 × 8 matrix switch) will be shown in Fig. 1(a). In this optical switch 1, an input side fiber bundle including eight input side optical fibers In1 to In8 is made to be opposite to an output side fiber bundle including eight output side optical fibers Out1 to Out8, and plural first mirrors 2a to 2h made to opposite to the input side optical fibers In1 to In8 are diagonally arranged at an angle of 45° in a space between the input side optical fibers In1 to In8 and the output side optical fibers Out1 to Out8. Besides, second mirrors 3a to 3h are respectively arranged in light reflection directions of the respective first mirrors 2a to 2h at the outside of the space between the input side optical fibers In1 to In8 and the output side optical fibers Out1 to Out8, and a preliminary optical fiber 4 is provided in the light reflection direction of the second mirrors 3a to 3h and in parallel to the output side optical fibers Out1 to Out8.

Each of the first mirrors 2a to 2h and each of the second mirrors 3a to 3h are driven in the direction vertical to the paper plane of Fig. 1(a) by actuators (not shown). In a normal use state, as shown in Fig. 1(a), the respective first mirrors 2a to 2h and the respective second mirrors 3a to 3h are retracted from the plane including optical axes of the input side optical fibers In1 to In8 and the output side optical fibers Out1 to Out8, and optical signals emitted from the input side optical fibers In1 to In8 are incident on the output side optical fibers Out1 to Out8.

Now, for example, in case an abnormality occurs in the input side optical fiber In1, among the first and the second mirrors which have been retracted, the first mirror 2a and the second mirror 3a corresponding to the input side optical fiber In1 jump out to the plane including the optical axes of the input side optical fibers In1 to In8 and the output side optical fibers Out1 to Out8, and as shown in Fig 1(b), light emitted from the input side optical fiber In1 is prevented from being incident on the output side optical fiber Out1, and the light emitted from the input side optical fiber In1 is reflected by the first mirror 2a and the second mirror 3a and is incident on the preliminary fiber 4, and can be extracted from the preliminary fiber 4. Incidentally, in Figs. 1(a) and 1(b), the mirrors retracted from the plane including the light axes of the input side optical fibers In1 to In8 and the output side optical fibers Out1 to Out8 are indicated by broken lines, and the mirrors jumping out to the plane are indicated by solid lines.

However, in the optical switch as stated above, since an optical path switching mechanism including the first and the second mirrors and the actuators is required, a relatively large space for accommodating the switching mechanism is required between the input side optical fibers and the output side optical fibers, the optical path length of light emitted from the input side optical fiber of the optical switch and incident on the output side optical fiber becomes long, and the insertion loss of an optical signal in the optical switch becomes large. Alternatively, in order to compensate the insertion loss and to achieve low loss for the optical switch, it is necessary to perform alignment of the optical axes of the input side and output side optical fibers with high accuracy, and there has been a fear that the productivity of the optical switch is lowered.

Besides, in order to decrease the space between the input side optical fibers and the output side optical fibers, the switching mechanism has to be made small, and therefore, a technology such as a micro machining technology MEMS (Micro-Electro-Mechanical Systems) is required, and there is a problem that the optical switch becomes very expensive. Further, since many (16 in a 8 × 8 matrix switch) mirrors and actuators are required, the efficiency is poor, a bad adjustment, failure and the like are apt to occur, and the manufacturing cost has been high. Besides, in order to retract the mirror from the optical path or to protrude it to the optical path, it has been necessary to increase the stroke of the actuator.

### [Disclosure of the Invention]

The invention has been made in view of the above technical problems, and its object is to provide an optical switch in which an insertion loss is decreased by shortening an optical path length between an input side optical transmission path and an output side transmission path, the number of drive components is decreased, and its drive stroke can be made small.

An optical switch of the invention is characterized by including plural input side optical transmission paths to emit optical signals from one ends, plural output side optical transmission paths on one ends of which the optical signals can be made incident, a preliminary optical transmission path on one end of which an optical signal can be made incident, a prism to totally reflect the optical signals emitted from the input side optical transmission paths and to guide them to the output side optical transmission paths, an optical element, when coming in contact with an interface of the prism, to extract an optical signal, which was totally reflected at the interface of the prism, by allowing the optical signal to pass through the interface, means for guiding the optical signal extracted by the optical element to the preliminary optical transmission path, and optical element position control means for moving the optical element between each position where it comes in contact with part of the interface of the prism at which light emitted from the input side optical transmission path is totally reflected and a position away from any position where it comes in contact with part of the interface of the prism at which the light emitted from the input side optical transmission path is totally reflected.

According to the optical switch of the invention, the optical signal emitted from the input side optical transmission path is totally reflected by the prism to bend the optical path, and then is incident on the output side optical transmission path, and the optical element is brought into contact with a specified position of the interface of the prism so that the optical signal emitted from a specific incident side optical transmission path is guided to the preliminary optical transmission path, and therefore, the optical path length between the input side optical transmission path and the output side optical transmission path can be made short. Thus, the insertion loss in the optical switch can be reduced. Besides, by merely moving the position of the optical element along the positions of the respective optical signals emitted from the input side optical transmission paths, switching can be performed between a normal operation state and a state where one of the optical signals is extracted from the preliminary optical transmission path, and therefore, the optical element has only to be capable of moving a distance several times larger than the diameter of the optical fiber, and the drive stroke of the optical element may be small. Besides, the number of parts such as drive components and actuators for them may be small, and the cost becomes low. Further, since the optical path length between the input and output can be made short, and the number of drive components may be small, the optical switch can also be miniaturized.

Besides, in the embodiment of the optical switch of the invention, the means for guiding the optical signal from the optical element to the preliminary optical transmission path includes a first light reflection surface provided on the optical element, an auxiliary optical element that is in contact with the interface of the prism, allows the optical signal to pass through the interface of the prism to make the optical signal incident on the prism, and makes the optical signal incident on the preliminary optical transmission path, and a second light reflection surface that is provided on the auxiliary optical element, receives the optical signal reflected by the first light reflection surface and deflects it to an incident direction to the prism. Accordingly, in the case where the optical element is not in contact with the interface of the prism at the place, the light emitted from the input optical transmission path at the place is totally reflected at the interface of the prism, and then is incident on the output side optical transmission path. However, when the optical element comes in contact with the interface of the prism at the place, the light emitted from the input side optical transmission path is not totally reflected at the interface of the prism, and is extracted into the optical element, is reflected at the light reflection surface, and after its traveling direction is bent, the light is reflected at the light reflection surface of the auxiliary optical element to again bend its traveling direction, is incident on the prism from the auxiliary optical element, and is further incident on the preliminary optical transmission path. Accordingly, according to this embodiment, the input side optical transmission paths and the output side optical transmission paths are arranged at the same side and are in order, and handling of the optical switch or an equipment mounted with the optical switch becomes easy.

Besides, according to another embodiment of the optical switch of the invention, end parts of the plural input side optical transmission paths, the plural output side optical transmission paths, and the preliminary optical transmission path are arranged in parallel to one another, end surfaces of the input side optical transmission paths are made opposite to one oblique surface of the prism, end surfaces of the output side optical transmission paths are made opposite to the other oblique surface of the prism, and at a place where the optical element is not in contact with the interface, the optical signal emitted from the incident side optical transmission path is totally reflected at the two oblique surfaces of the prism, and then are incident on the outgoing side optical transmission path. Accordingly, according to this embodiment, since the input side optical transmission paths and the output side optical transmission paths are disposed in parallel to one another, the optical axis adjustment of the optical transmission paths other than the preliminary optical transmission path can be collectively easily performed. Besides, since the input side optical transmission paths, the output side optical transmission paths, and the preliminary optical transmission path are disposed in parallel to one another, all the optical transmission paths are well arranged at the same side of the optical switch, and handling of the optical switch or an equipment mounted with the optical switch becomes easy. Besides, formation of an array of the respective optical fibers or integration thereof by a connector becomes possible.

Besides, according to still another embodiment of the invention, the optical element position control means includes means for causing the optical element to come in contact with or to separate from the interface of the prism and means for moving the optical element along an arrangement direction of the input side optical transmission paths. Accordingly, in the case where the optical element is moved along the arrangement direction of the input side optical transmission paths, the optical element is moved in a state where it is separated from the interface of the prism, so that it is possible to prevent that the optical element and the prism rub against each other and are worn or the surface is roughened.

Besides, according to still another embodiment of the invention, the optical element position control means includes means for moving the optical element along the arrangement direction of the input side optical transmission paths, and further includes positioning means for positioning the optical element at each position where it comes in contact with part of the interface of the prism at which the light emitted from the input side optical transmission path is totally reflected. Accordingly, according to this embodiment, the optical element can be positioned at each position where it comes in contact with the interface of the prism at which the light emitted from the input side optical transmission path is totally reflected, and it is possible to prevent the position of the optical element from being shifted by vibration or the error of the optical element position control means and to raise the position accuracy of the optical element.

Further, the positioning means includes an actuator to switch the optical element between a positioning state and a release state, and when it is designed such that the actuator releases the optical element from the positioning state in an energized state, and brings the optical element into the positioning state in a de-energized state, the actuator is brought into the energized state only in the case where the optical element is moved between a position of one of the input side optical transmission paths and a position away from the position. Since the de-energized state occurs both in the use state where the optical element is retracted at the position away from the position of one of the input side optical transmission paths and in the use state where the optical element is brought into contact with the prism at the position of one of the input side optical transmission paths, electric power is merely transiently consumed when the optical element is moved, the positioning means does not consume electric power in the state where the optical element is at rest, and it is possible to reduce the power requirements of the optical switch.

According to still another embodiment of the optical switch of the invention, a linear motion voice coil motor may be used as the motive power of the optical element position control means. The voice coil motor is used for a CD, an MD or the like, and since its displacement resolution is of the order of submicrons, when the voice coil motor is used for the optical element position control part, the position accuracy of the optical element can be made to deal with a fine array pitch of an optical fiber array, and the position adjustment of the optical element can be performed at high accuracy.

Incidentally, the structural elements of the invention described above can be combined as arbitrarily as possible.

### [Brief Description of the Drawings]

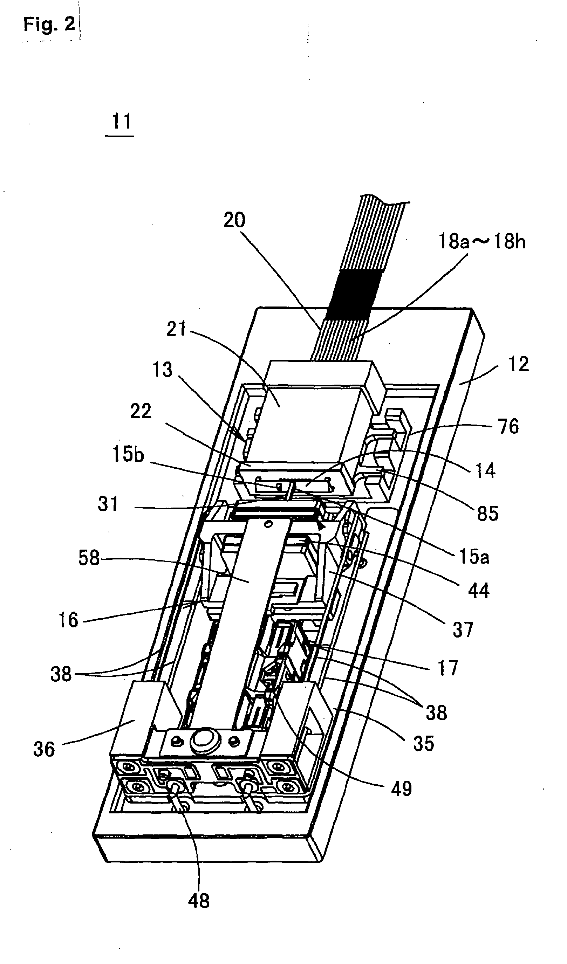

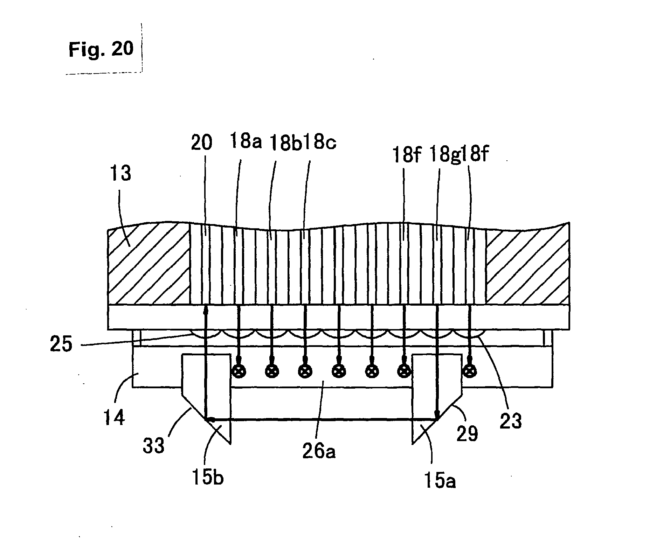

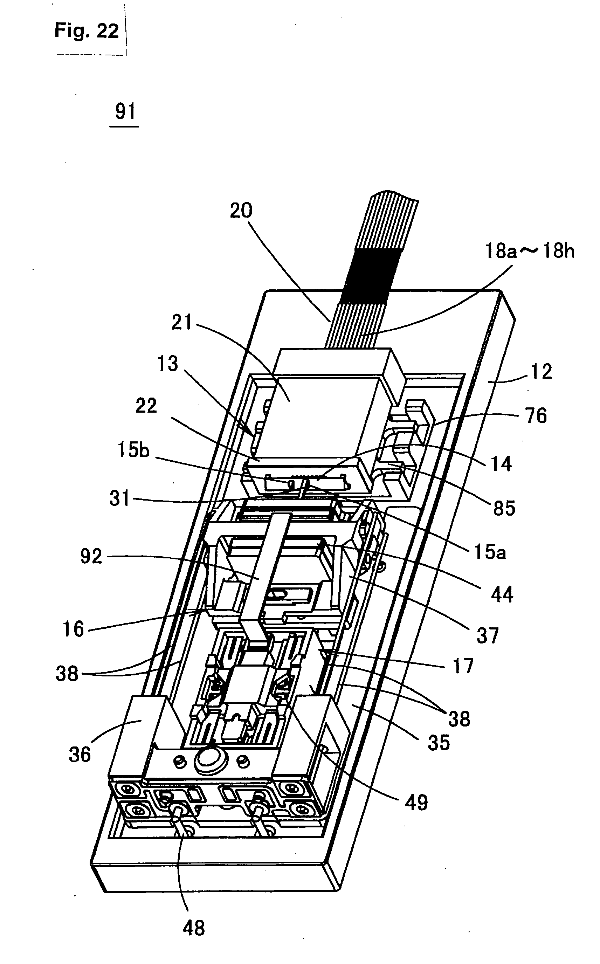

[Fig. 1]
   Parts (a) and (b) are schematic views for explaining the principle of a conventional optical switch.
[Fig. 2]
   A perspective view showing an optical switch according to a first embodiment of the invention.
[Fig. 3]
   A plan view of the optical switch shown in Fig. 2.
[Fig. 4]
   A side view of the optical switch shown in Fig. 2.
[Fig. 5]
   Part (a) is a front view of a connector constituting an input/output part, and part (b) is a front view of the connector to which a lens array panel is attached.
[Fig. 6]
   A perspective view showing a fixed prism, a driven prism, and a preliminary optical fiber prism in the optical switch of Fig. 2.
[Fig. 7]
   A view for explaining the operation of the fixed prism in the optical switch of Fig. 2.
[Fig. 8]
   A perspective view of the driven prism.
[Fig. 9]
   A side view showing a positional relation between the fixed prism and the driven prism.
[Fig. 10]
   A perspective view of the preliminary optical fiber prism.
[Fig. 11]
   A plan view showing a positional relation between the fixed prism and the preliminary optical fiber prism.
[Fig. 12]
   An exploded perspective view showing a rectangular frame, a damper holder, and a prism holder constituting a prism driving part.
[Fig. 13]
   Parts (a) and (b) are a plan view and a side view of the rectangular frame to which the damper holder and the like are attached.
[Fig. 14]
   Parts (a) and (b) are a plan view and a side view of the prism holder.
[Fig. 15]
   A front view showing a positioning member and a V groove member in a state where positioning protrusions and V grooves are engaged with each other.
[Fig. 16]
   An exploded perspective view showing the optical switch of Fig. 2.
[Fig. 17]
   Parts (a) and (b) are schematic views for explaining the operation of a positioning part.
[Fig. 18]
   An explanatory view showing a position of the driven prism in a case where there is no abnormality in optical signals transmitting through any input side optical fibers.
[Fig. 19]
   An explanatory view showing a state when the driven prism is moved.
[Fig. 20]
   An explanatory view showing a position of the driven prism in a case where an abnormality occurs in an optical signal transmitting through a seventh input side optical fiber.
[Fig. 21]
   Part (a) is a view showing a section at the position of the driven prism in Fig. 20, and part (b) is a view showing a section at the position of the preliminary optical fiber in Fig. 20.
[Fig. 22]
   A perspective view showing an optical switch according to a second embodiment of the invention.
[Fig. 23]
   A plan view of the optical switch shown in Fig. 22.
[Fig. 24]
   A side view of the optical switch shown in Fig. 22.
[Fig. 25]
   Parts (a) and (b) are schematic views for explaining the operation of a positioning part in the optical switch of Fig. 22.

Main reference numerals used in the drawings are as follows.
- 13: input/output part
- 14: fixed prism
- 15a: driven prism
- 15b: preliminary optical fiber prism
- 16: prism driving part
- 17: positioning part
- 18a to 18h: input side optical fiber
- 19a to 19h: output side optical fiber
- 20: preliminary optical fiber
- 23: lens
- 24: lens
- 25: lens
- 26a: oblique surface
- 26b: oblique surface
- 28: inclined surface
- 29: reflection surface
- 31: arm
- 32: inclined surface
- 33: reflection surface
- 37: prism holder
- 38: support elastic body
- 44: voice coil motor
- 49: electromagnetic actuator
- 58: plate spring
- 92: plate spring
- 93: press protrusion

### [Best Mode for Carrying Out the Invention]

The embodiments of the present invention will next be concretely explained. However, the present invention is not limited to the following embodiments, but can be naturally modified in the scope not departing from the technical idea of the present invention.

### (First Embodiment)

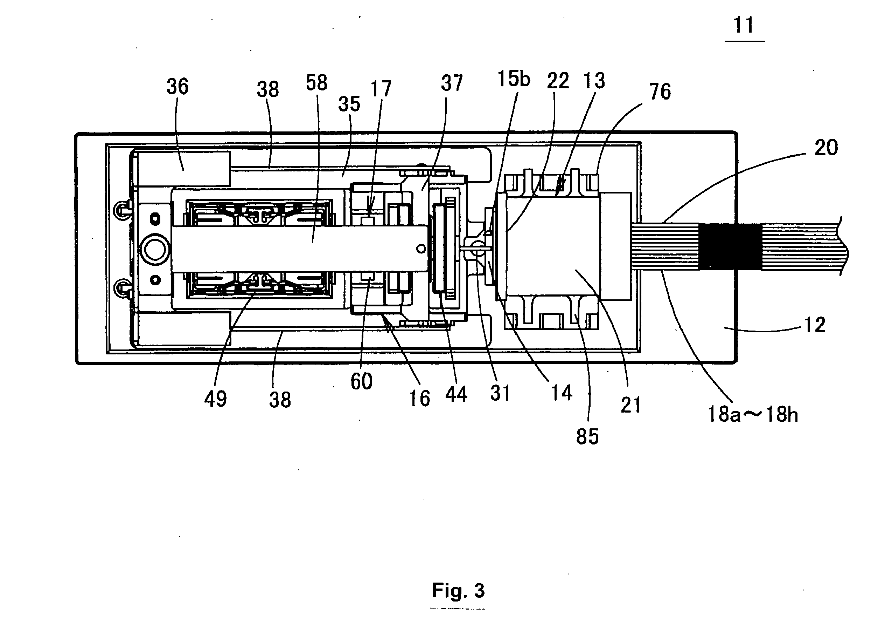

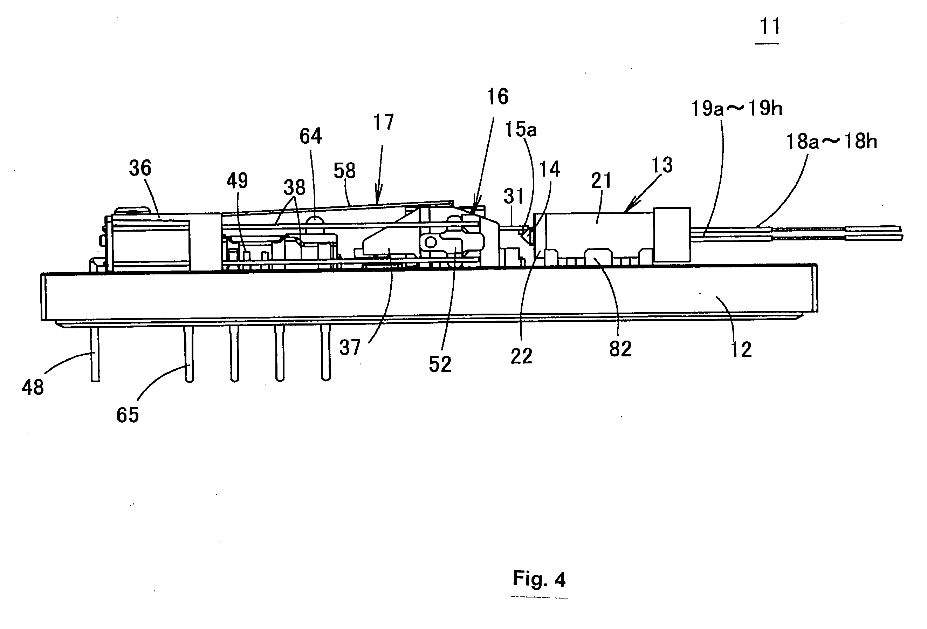

Fig. 2 is a perspective view of an optical switch (redundant optical switch) according to a first embodiment of the invention, Fig. 3 is a plan view thereof, and Fig. 4 is a side view thereof. This optical switch 11 is such that an input/output part 13, a prism driving part 16, and a positioning part 17 are mounted on a base 12 made of ceramic, metal, plastic or the like. Besides, a fixed prism 14 is attached to the input/output part 13, a preliminary optical fiber prism 15b is attached to the fixed prism 14, and the prism driving part 16 holds a driven prism 15a.

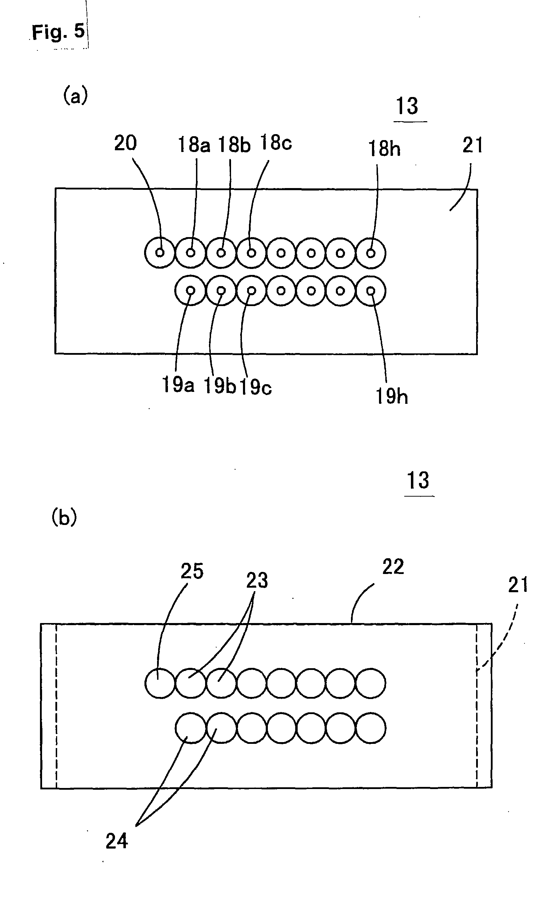

The input/output part 13 includes plural input side optical fibers (fiber array) 18a to 18h as input side optical transmission paths, plural output side optical fibers (fiber array) 19a to 19h as output side optical transmission paths, and a single preliminary optical fiber (redundant optical fiber) 20, and they are integrally bundled by a connector 21 such as an MT connector. Fig. 5(a) is a front view of the input/output part 13, and Fig. 5(b) is a front view of the input/output part 13 to which a lens array panel 22 is attached. As shown in Fig. 5(a), the plural input side optical fibers 18a to 18h are brought into close contact and are arranged in parallel to one another in one lateral line, the plural output side optical fibers 19a to 19h are also brought into close contact and are arranged in parallel to one another in one lateral line, and the input side optical fibers 18a to 18h and the output side optical fibers 19a to 19h are arranged in two stages in parallel to each other. The preliminary optical fiber 20 is arranged in parallel to the input side optical fibers 18a so that it is arranged side by side with the input side optical fibers 18a to 18h. The input side optical fibers 18a to 18h, the output side optical fibers 19a to 19h, and the preliminary optical fiber 20 are integrated by the connector 21, and end surfaces of the input side optical fibers 18a to 18h, the output side optical fibers 19a to 19h, and the preliminary optical fiber 20 are exposed at the front of the connector 21. Incidentally, in this embodiment, although the description will be made on the assumption that the number of the input side optical fibers and the number of the output side optical fibers are respectively eight, the number of the optical fibers may be arbitrary.

As shown in Fig. 5(b), the lens array panel 22 is attached to the front of the connector 21. The lens array panel 22 is made of transparent plastic or glass, lenses 23 are formed on the lens array panel 22 to coincide with the optical axes of the input side optical fibers 18a to 18h, lenses 24 are formed to coincide with the optical axes of the output side optical fibers 19a to 19h, and a lens 25 is formed to coincide with the optical axis of the preliminary optical fiber 20. The lens 23 is for converting light emitted from the input side optical fiber 18a into collimated light, the lenses 24 and 25 condense the collimated light to couple it to the output side optical fiber 19a or the preliminary optical fiber 20, and these lenses 23, 24 and 25 are made of spherical lenses or aspherical lenses.

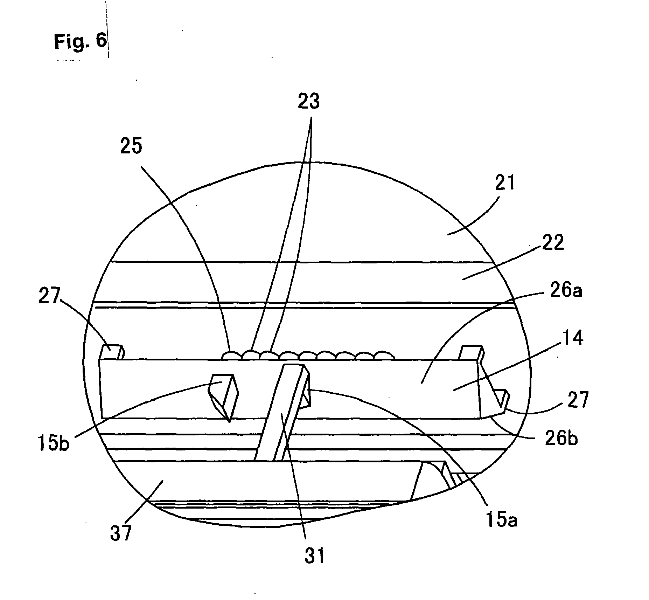

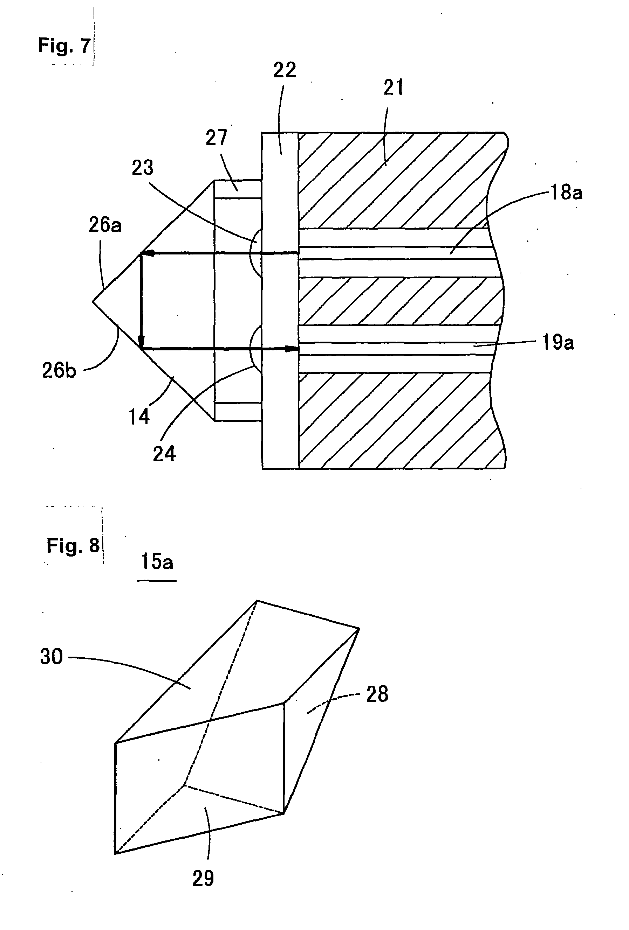

The fixed prism 14 is a triangle prism formed of glass or transparent plastic and having a triangle pole shape. As shown in Fig. 6 and Fig. 7, the fixed prism 14 is disposed so that an incident/emitting surface as its vertical surface is opposite to the lens array panel 22, and is fixed in front of the lens array panel 22 by a leg part 27. An AR coat (Anti-Reflection coat; lens coating) is formed on the incident/emitting surface of the fixed prism 14, and the loss of transmitted light is reduced. The fixed prism 14 has a smooth oblique surface 26a and an oblique surface 26b to be opposite to the incident/emitting surface, and both the oblique surfaces 26a and 26b form an angle of 90° to each other. Especially, the oblique surface 26a and the oblique surface 26b are inclined in opposite directions by 45° with respect to the plane including the respective optical axes of the input side optical fibers 18a to 18h. As shown in Fig. 7, the one oblique surface 26a of the fixed prism 14 is positioned at the same height as the input side optical fibers 18a to 18h and the preliminary optical fiber 20 (lenses 23 and 25), and the other oblique surface 26b is positioned at the same height as the output side optical fibers 19a to 19h (lenses 24). This fixed prism 14 may be such that the leg part 27 is bonded to the lens array panel 22 by adhesive, or may be integrally formed with the lens panel 22.

According to the input/output part 13 provided with the fixed prism 14, in the case where there is no abnormality in optical signals transmitting through all the input side optical fibers 18a to 18h, as shown in Fig. 7, the optical signal emitted from, for example, the input side optical fiber 18a is collimated by the lens 23 into a parallel light, is incident into the fixed prism 14, is totally reflected at the oblique surfaces 26a and 26b, is returned to the input/output part 13, is condensed by the lens 24, is incident on the output side optical fiber 19a, and is transmitted through the output side optical fiber 19a. Similarly, the optical signals emitted from the input side optical fibers 18b to 18h are respectively collimated by the lenses 23 into parallel lights, are incident into the fixed prism 14, are totally reflected at the oblique surfaces 26a and 26b, are returned to the input/output part 13, are condensed by the lenses 24, are incident on the output side optical fibers 19b to 19h, and are transmitted through the output side optical fibers 19b to 19h.

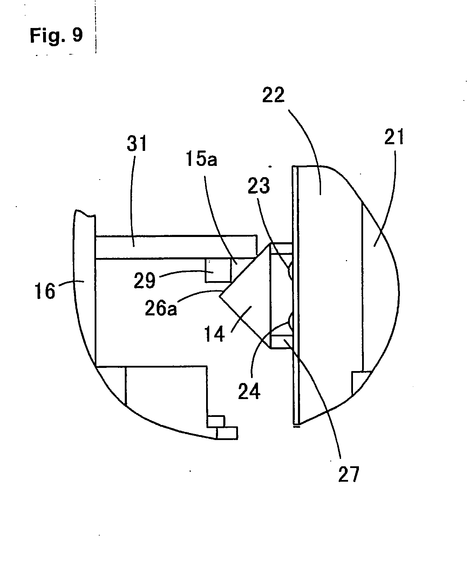

The driven prism 15a is formed of glass or transparent plastic into a hexahedron, and includes, as shown in Fig. 8, a smooth inclined surface 28 and a reflection surface 29. The inclined surface 28 is inclined by 45° around the horizontal axis with respect to an upper surface 30 of the driven prism 15a, and the reflection surface 29 is inclined by 45° around the vertical axis with respect to planes orthogonal to the upper surface 30 and the inclined surface 28. As shown in Fig. 6 and Fig. 9, the upper surface 30 of the driven prism 15a is bonded to a lower surface of a tip end of an arm 31 of the prism driving part 16, and the inclined surface 28 is brought into contact with the oblique surface 26a of the fixed prism 14. The driven prism 15a is horizontally moved by the prism driving part 16 along the direction in which the input side optical fibers 18a to 18h are arranged, and passes through a position where an evanescent wave of light emitted from each of the input side optical fibers 18a to 18h leaks.

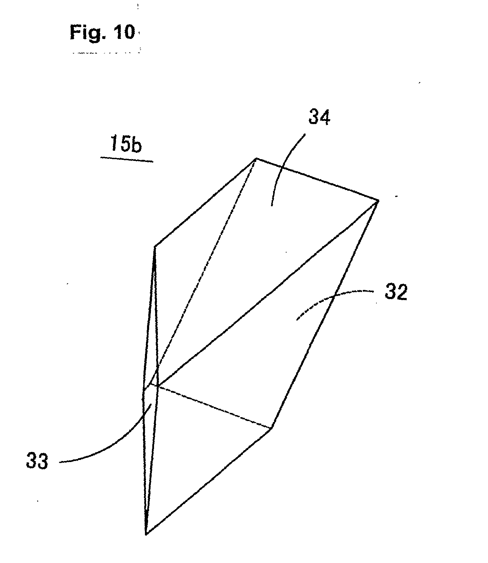

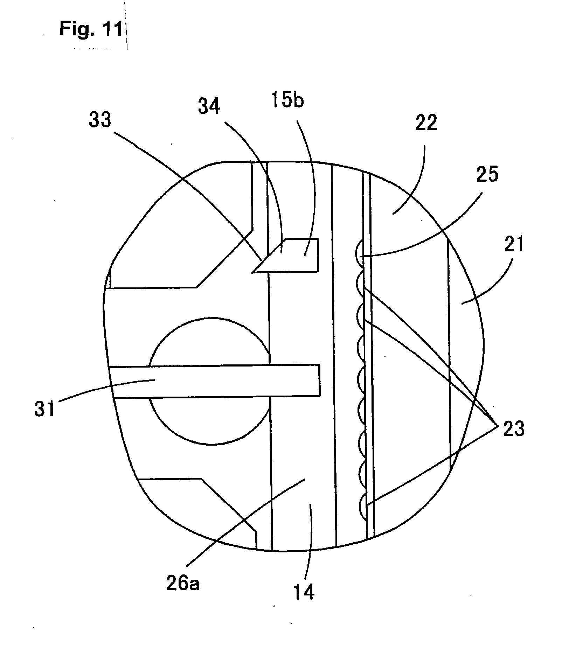

The preliminary optical fiber prism 15b is also formed of glass or transparent plastic into a hexahedron, and includes, as shown in Fig. 10, a smooth inclined surface 32 and a reflection surface 33. The inclined surface 32 and the reflection surface 33 are orthogonal to each other. The inclined surface 32 is inclined around the horizontal axis by 45° with respect to an upper surface 34 of the driven prism 15a, and the reflection surface 33 is inclined around the vertical axis by 45° with respect to planes orthogonal to the upper surface 34 and the inclined surface 32. However, the inclined surface 28 of the driven prism 15a and the inclined surface 32 of the preliminary optical fiber prism 15b are inclined in the opposite directions to each other. As shown in Fig. 6 and Fig. 11, the preliminary optical fiber prism 15b is bonded to and integrated with the oblique surface 26a of the fixed prism 14 so that the inclined surface 32 is coincident with the optical axis of the preliminary optical fiber 20. Incidentally, although the driven prism 15a and the preliminary optical fiber prism 15b have only to be formed of an optically transparent material having a refractive index larger than air, it is desirable that they have refractive indexes equal to the fixed prism 14 or have refractive indexes than the fixed prism 14 . Besides, it is desirable that a light beam is not refracted when it is incident on the driven prism 15a from the fixed prism 14 or when it is incident on the fixed prism 14 from the preliminary optical fiber prism 15b, it is more desirable that the refractive indexes of the driven prism 15a and the preliminary optical fiber prism 15b are equal to the refractive index of the fixed prism 14.

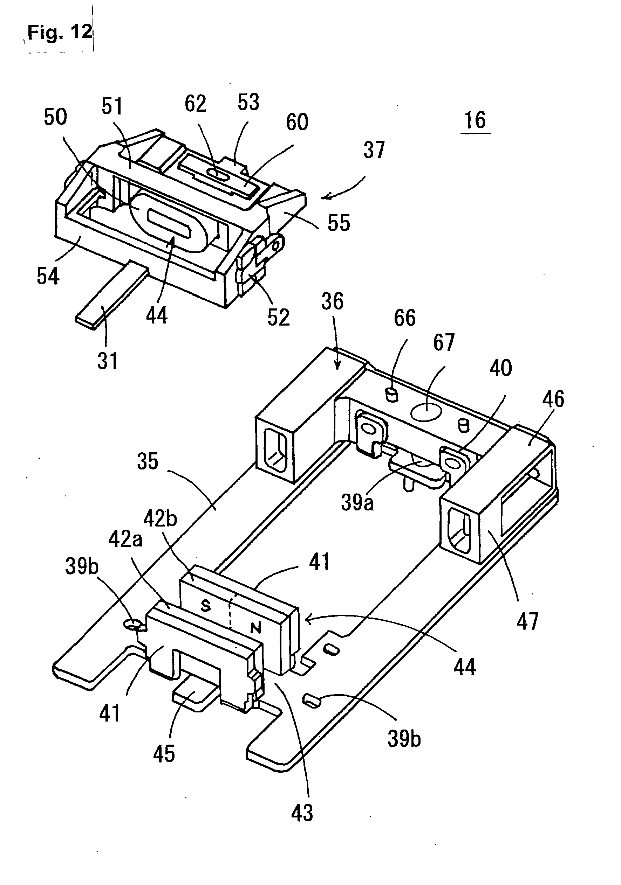

As shown in Fig. 12 and Fig. 3, the prism driving part 16 is such that a damper holder 36 constituting a support stand is provided on one end part of a rectangular frame body 35, a prism holder 37 is disposed at the other end part, and the prism holder 37 is elastically supported by a wire-like support elastic body 38 one end of which is fixed to the damper holder 36. The prism holder 37 is driven by a linear motion voice coil motor (VCM) 44.

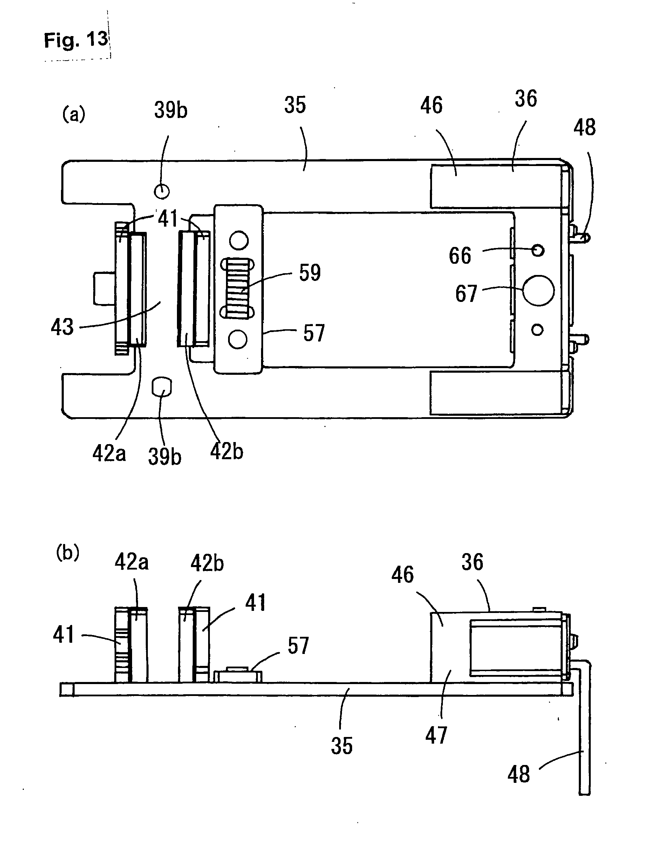

The rectangular frame body 35 is formed by bending a metal plate, and as shown in Fig. 12 and Fig. 13, a screw hole 39a is provided at the center portion of a one end side connection part, and a pair of fixing pieces 40 are raised upward at an inner edge part of the connection part. The damper holder 36 is mounted on the one end side connection part of the rectangular frame body 35, and an intermediate part of the damper holder 36 is bonded to the connection part and the fixing pieces 40 and is fixed. On the other hand, opposite walls 41 are raised substantially orthogonally upward from both edges at the other end side connection part 43 of the rectangular frame body 35, and both the opposite walls 41 are opposite to each other at a specified distance away. Permanent magnets 42a and 42b magnetized so that polarities of the front and back surfaces are different between the right and left are fixed to the opposite walls 41 so that different polarities are opposite to each other. The permanent magnets 42a and 42b, the other end side connection part 43 and the opposite walls 41 form a fixed portion of the linear motion voice coil motor 44, and the other end side connection part 43 and the opposite walls 41 function as a yoke thereof. Further, part of the one opposite wall 41 is cut away, and by that, a support piece 45 extending horizontally is formed, and fitting holes 39b are provided at both ends of the other end side connection part 43.

The damper holder 36 is substantially U-shaped, and arm parts 46 at both sides are formed into box shapes opening at end surfaces and side surfaces. Upper and lower two support elastic bodies 38 are attached to one end of the arm part 46. A gel-like damper agent (not shown) is filled in a tube part at the tip of the arm part 46, and the support elastic bodies 38 to be inserted are held. The damper agent is filled in only the tube part 47 at the tip, not the whole of the arm part 46. Thus, occurrence of voids (bubbles) to the damper agent is prevented. Besides, the damping characteristic of the support elastic body 38 is improved, and convergence properties after deformation are raised. That is, after the support elastic body 38 is elastically deformed, a time in which it is returned to the original shape is shortened. Besides, the damper holder 36 is provided with a pair of terminals 48 protruding from the side surface and directed downward. Incidentally, by the arm part 46, it becomes possible to secure a disposition space of an electromagnetic actuator 49 of the positioning part 17 in the opening portion in the rectangular frame body 35.

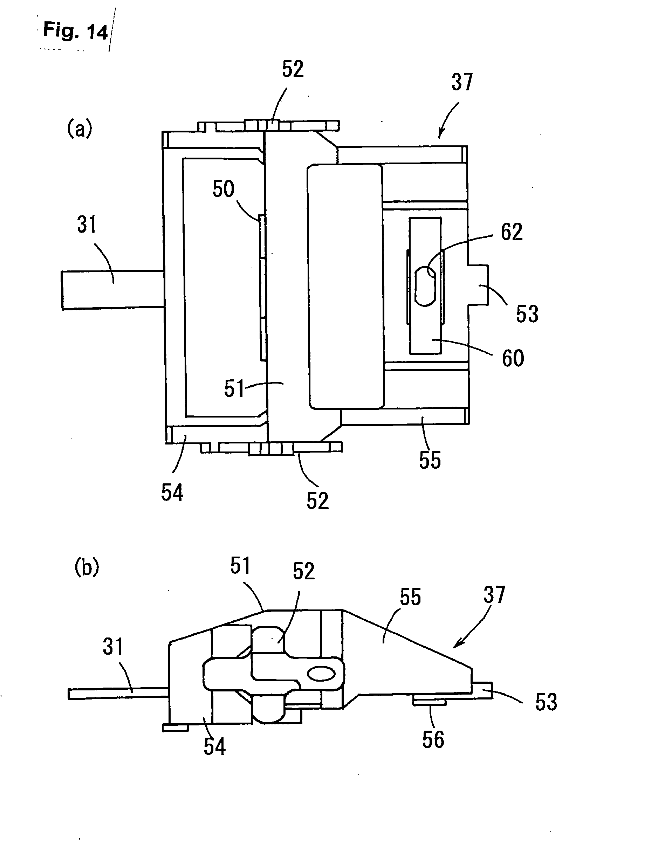

As shown in Fig. 12 and Fig. 14, the prism holder 37 includes a rectangular holder part 51 in which a wound coil 50 is disposed at its center part. Connection pieces 52 made of conductive metal material are attached to both side surfaces of the rectangular holding part 51. One end of the support elastic body 38 is connected to the connection piece 52 by brazing, welding or the like. By this, the prism holder 37 is elastically supported by the upper and lower two support elastic bodies 38 provided at the right and left two places, and can be translated without being inclined with respect to each of the upper and lower and left and right directions. Besides, both end parts of the coil 50 are electrically connected to the connection pieces 52 by soldering or the like. Accordingly, electric power can be applied to the coil 50 through the support elastic bodies 38, and the current direction can be changed in either direction. Incidentally, reference numeral 53 denotes a grip piece used to hold the prism holder 37 when the coil 50 is connected to the connection pieces 52 by soldering or the like.

Frame parts 54 and 55 are extended before and behind the rectangular holding part 51, the opposite wall 41 and the permanent magnet 42a of the rectangular frame body 35, and the opposite wall 41 and the permanent magnet 42b are respectively inserted therein, and the coil 50 is sandwiched between the permanent magnet 42a and the permanent magnet 42b. In this way, the voice coil motor 44 is constructed of the yoke made of the opposite walls 41 and the like, the permanent magnets 42a and 42b and the coil 50. When current is supplied to the coil 50, the prism holder 37 is translated from side to side by the Lorentz force acting on the coil 50, and the prism holder 37 becomes stationary at a position where the Lorentz force acting on the coil 50 balances the elastic return force of the support elastic body 38. Besides, since the Lorentz force is changed by the value of the current supplied to the coil 50, the balance position of the prism holder 37 can be controlled by adjusting the current supplied to the coil 50, and the movement direction of the prism holder 37 can be changed by changing the direction of the current supplied to the coil 50.

The rod-like arm 31 having elasticity is horizontally extended from the front of the frame part 54 provided at the front of the prism holder 37, and the upper surface 30 of the driven prism 15a is fixed by adhesion to the lower surface of the tip part of the arm 31. Thus, when the voice coil motor 44 is driven to move the prism holder 37 of the prism driving part 16 in the horizontal direction, the driven prism 15a can be moved in parallel to the longitudinal direction of the oblique surface 26a of the fixed prism 14.

The positioning part 17 includes positioning protrusions 56 provided at the prism holder 37, a V groove member 57 as a reception part of the positioning protrusions 56, a plate spring 58 fixed to the damper holder 36 of the prism driving part 16, and the electromagnetic actuator 49 to move the plate spring 58.

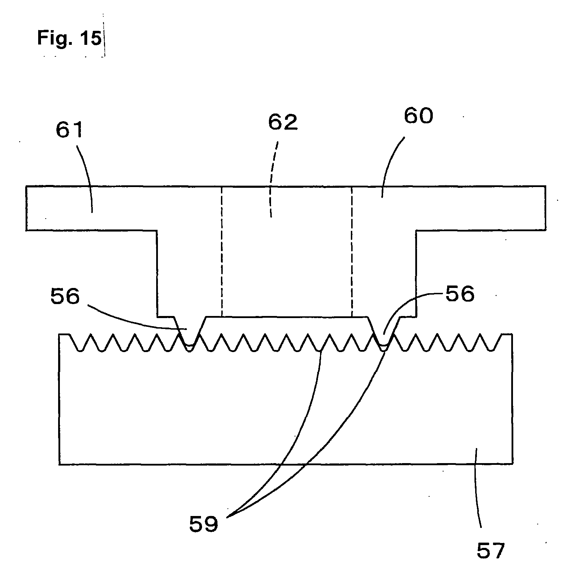

The V groove member 57 as the positioning receiving part is attached to the vicinity of the other end connection part 43 of the rectangular frame body 35 so that it becomes parallel to the other end side connection part 43 of the rectangular frame body 35. As shown in Fig. 15, plural V grooves 59 (in this embodiment, an angle of the V groove is set to 60°) are formed on the upper surface of the V groove member 57 at a constant pitch in parallel to one another. The respective V grooves 59 are formed at the same pitch as the arrangement pitch of the input side optical fibers 18a to 18h.

The plural positioning protrusions 56 engageable with the V grooves 59 of the V groove member 57 are provided at the lower surface of a positioning member 60. The positioning member 60 is attached to the one frame part 55 provided in the prism holder 37. The positioning member 60 is mounted to the opening formed in the frame part 55 from above, and an upper flat part 61 is fixed to the upper surface of the frame part 55 by adhesion or the like. A through hole 62 for reduction in weight is formed at the center part of the positioning member 60, and the plural positioning parts 56 are formed at a pitch integer times larger than the arrangement pitch of the input side optical fibers 18a to 18h. The positioning protrusion 56 is a V-shaped protrusion when viewed from the front of the prism holder 37, and its tip is chamfered in the form of a circular arc. The positioning protrusions 56 are engaged with the V grooves 59 at plural places of the V groove member 57, so that the positioning member 60, that is, the prism holder 37 is fixed in a state where it is positioned with respect to the V groove member 57 fixed to the base 12.

The electromagnetic actuator 49 is constructed by using an electromagnet device adopted in a conventionally well-known electromagnetic relay or the like. Although the details are not shown, the electromagnetic actuator 49 includes a movable iron piece 63 swinging seesaw, and a pressing protrusion 64 made of synthetic resin material or the like is fixed to the upper surface of a tip part of the movable iron piece 63 by adhesive or the like. Besides, an electromagnet to attract the movable iron piece 63 and to rotate the movable iron piece 63 is incorporated in the inside of the electromagnetic actuator 49. In the state where the coil of the electromagnet is not energized, the movable iron piece 63 lies horizontally, and when the coil of the electromagnet is energized, the movable iron piece 63 is attracted by the electromagnet and is tilted, and the pressing protrusion 64 is pushed upward. Incidentally, respective terminals 65 protrude downward at both ends of the electromagnetic actuator 49.

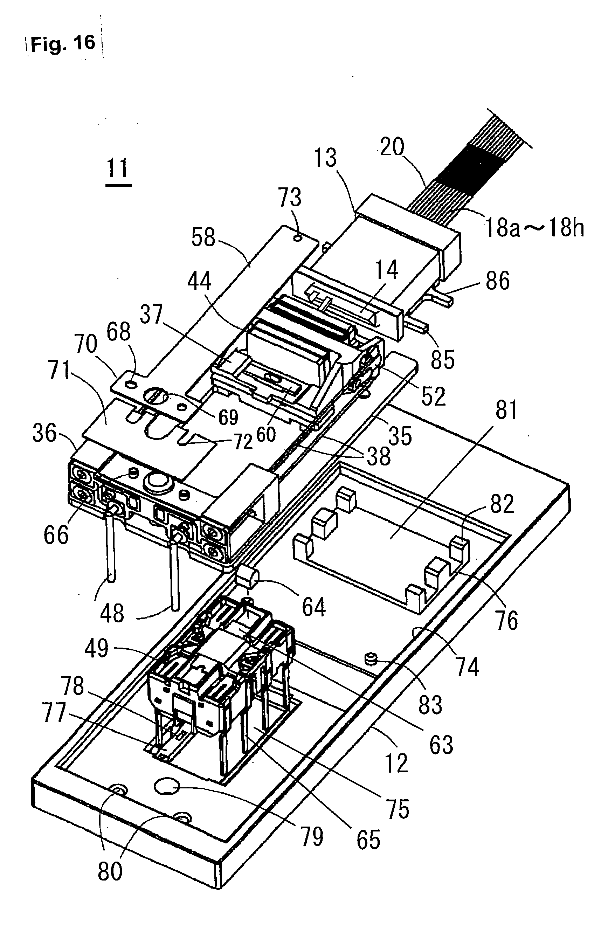

A base end part of the plate spring 58 is fixed to the upper surface of the damper holder 36. Protrusions 66 are protruded at two places on the upper surface of the intermediate part of the damper holder 36, and an insertion hole 67 is provided between them. The plate spring 58 as the elastic member is attached using the protrusions 66 and the insertion hole 67. As shown in Fig. 16, one end part of the plate spring 58 is an attachment piece 70 in which first through holes 68 with which the protrusions 66 are engaged and a second through hole 69 communicating with the insertion hole 67 are respectively formed. Besides, a spacer 71 is disposed between the intermediate upper surface of the damper holder 36 and the attachment piece 70 of the plate spring 58. Arc-shaped notches 72 are formed at three places of the spacer 71 to prevent interference between the protrusions 66 and the insertion hole 67. By changing the number (or thickness) of the spacers 71, the position of the plate spring 58 with respect to the prism holder 37 in the vertical direction can be adjusted. The plate spring 58 is attached by engaging a screw with the screw hole 39a of the rectangular frame body 35 through the second through hole 69 and the through hole 67 of the damper holder 36. The plate spring 58 passes above the electromagnetic actuator 49, the tip part is in contact with the upper surface of the prism holder 37 of the prism driving part 16, and by its own elastic force, the barycenter position of the prism holder 37 is pressed by a pressing protrusion 73 provided at the lower surface of the tip.

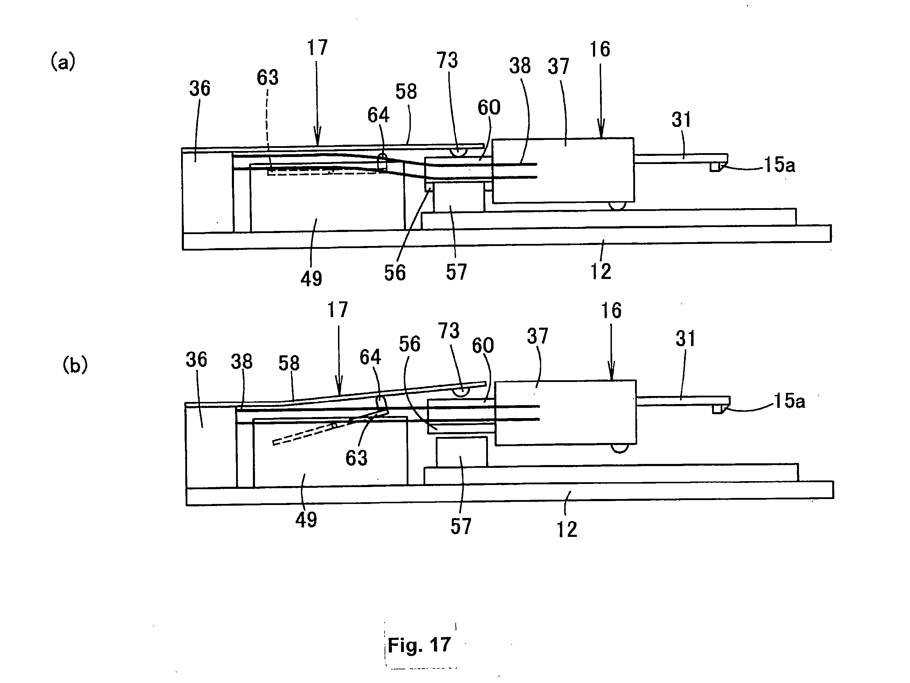

In the case where the pressing protrusion 64 provided at the movable iron piece 63 of the electromagnetic actuator 49 is retracted downward, as shown in Fig. 17(a), the plate spring 58 depresses the prism holder 37 by the pressing protrusion 73, and by that, the positioning protrusions 56 engage with the V grooves 59 of the V groove member 57, and the prism holder 37 holding the driven prism 15a is locked and can not be moved in the horizontal direction. Besides, when the electromagnetic actuator 49 is driven to protrude the pressing protrusion 64 upward, as shown in Fig. 17(b), the intermediate lower surface of the plate spring 58 is pressed upward by the pressing protrusion 64, and by that, the press state of the prism holder 37 is released, the positioning protrusions 56 come off the V grooves 59, and the prism holder 37 can be moved horizontally by the voice coil motor 44.

As shown in Fig. 16, the base 12 includes a rectangular recess 74 occupying most of the upper surface, a holding recess 75 in which the electromagnetic actuator 49 of the positioning part 17 is installed, and a holding stand 76 on which the input/output part 13 is disposed. The holding recess 75 includes protrusions 77 at both sides, and plural first terminal holes 78 are formed therein. The respective terminals 65 protruding from the electromagnetic actuator 49 protrude downward through the first terminal holes 78 of the base 12. Besides, a relief recess 79 is formed at one place in the vicinity of the holding recess 75, and second terminal holes 80 are respectively formed at two places. The holding stand 76 is such that guide protrusions 82 are formed at three places of each of both sides of a plate-like part 81 slightly protruding from the upper surface of the base 12. Besides, a pair of engagement protrusions 83 are formed between the holding recess 75 and the holding stand 76.

Next, an assembling method of the optical switch having the above structure will be described. As shown in Fig. 16, the pressing protrusion 64 is bonded to the upper surface of one end of the movable iron piece 63 of the electromagnetic actuator 49. This electromagnetic actuator 49 is mounted on and bonded to the holding recess 75 of the base 12, and the respective terminals 65 are made to protrude from the lower surface.

The wound coil 50 is disposed on the rectangular holding part 51 of the prism holder 37, and both ends thereof are soldered to the respective connection pieces 52 fixed to both the side surfaces. The positioning member 60 is fixed to the frame part 55, and the driven prism 15a is bonded to the lower surface of the tip part of the arm 31 provided at the frame part 54.

Besides, the support elastic bodies 38 are attached to the arm parts 46 of the damper holder 36, and the damper agents are filled in the tube parts 47 and are solidified. The damper holder 36 is bonded to the one end connection part of the rectangular frame body 35 formed by press working and the fixing pieces 40. The bonding strength of the damper holder 36 can be raised by the existence of the fixing pieces 40. Besides, the permanent magnets 42a and 42b are made opposite to each other and are disposed on the opposite walls 41 of the other end connection part 43 of the rectangular frame body 35 so that the polarities are different from each other, and the V groove member 57 is fixed in the vicinity thereof.

The prism holder 37 is mounted on the rectangular frame body 35 so that the opposite walls 41 on which the permanent magnets 42a and 42b are provided press through the respective frame parts 54 and 55. Besides, the support elastic bodies 38 are welded to the connection pieces 52 of the prism holder 37.

After fitting of the damper holder 36 and the like is completed, the rectangular frame body 35 is mounted in the recess 74 of the base 12. The rectangular frame body 35 is positioned in the width direction by the inner edges of the recess 74 and is positioned in the longitudinal direction by the engagement protrusions 83 of the base 12 engaging with the engagement holes 39b.

Subsequently, the plate spring 58 is attached to the damper holder 36 through the spacers 71. At this time, the number of the intervening spacers 71 is changed, so that the position of the plate spring 58 with respect to the prism holder 37 is adjusted. That is, when the electromagnetic actuator 49 is in the deenergized state, the pressing protrusion 64 is separated from the plate spring 58, and the prism holder 37 is depressed by the urging force of the plate spring 58 and is positioned with respect to the rectangular frame body 35 by the positioning protrusions 56. Besides, when the electromagnetic actuator 49 becomes in the energized state and the movable iron piece 63 is rotated, the pressing protrusion 64 of the movable iron piece 63 comes in contact with the plate spring 58 to press the plate spring 58 upward, the respective positioning protrusions 56 of the prism holder 37 are separated from the V groove member 57, and reciprocal movement is made possible along the permanent magnets 42a and 42b. By this, the voice coil motor 44 is completed.

Thereafter, the input/output part 13 in which the fixed prism 14 and the preliminary optical fiber prism 15b are attached is mounted on the holding stand 76 of the base 12. At this time, an adjusting plate 85 from which plural pins 86 protrude horizontally is bonded to the lower surface of the connector 21, and the input/output part 13 is mounted on the holding stand 76 so that the pins 86 are put between the guide protrusions 82 of the holding stand 76. Next, the position of the input/output part 13 is adjusted in the mount surface, so that after lights from the input side optical fibers 18a to 18h are reflected by the respective oblique surfaces 26a and 26b of the fixed prism 14, highest amount of lights are outputted to the output side optical fibers 19a to 19h. Besides, adjustment is performed so that the inclined surface 28 of the driven prism 15a provided on the arm 31 of the prism holder 37 can come in close contact with the oblique surface 26a of the fixed prism 14. In this way, when a desired amount of output light is obtained, the adhesive injected between the adjustment plate 85 and the holding stand 76 is solidified by irradiation of ultraviolet rays, so that the input/output part 13 is fixed to the base 12.

Finally, a case (not shown) is covered on the base 12, and fitted surfaces and the like are sealed to make the inside airtight, so that the optical switch is completed. In the completed state, the inclined surface 28 of the driven prism 15a and the inclined surface 32 of the preliminary optical fiber prism 15b are inclined in the opposite directions to each other, and light incident on the inclined surface 28 from the direction parallel to the input side optical fibers 18a to 18h is reflected at the inclined surface 28, and is incident on the inclined surface 32 of the preliminary optical fiber prism 15b. The light incident on the inclined surface 32 is reflected by the inclined surface 32, and its direction is changed to the direction parallel to the preliminary optical fiber 20.

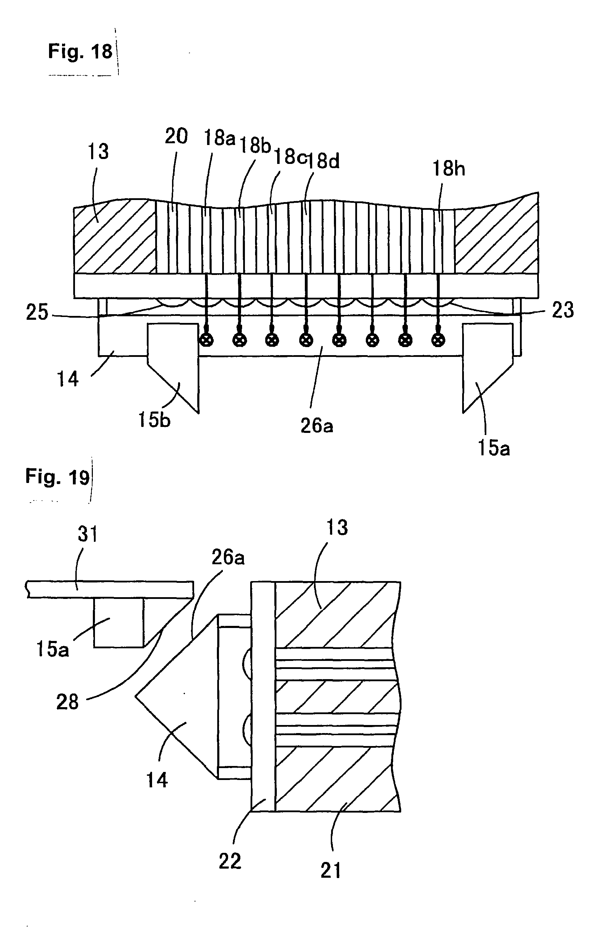

Next, the operation of the optical switch 11 will be described. In the case where the electromagnetic actuator 49 of the positioning part 17 is demagnetized (de-energized state), as shown in Fig. 17(a), since the pressing protrusion 64 of the electromagnetic actuator 49 is retracted downward and is separated from the plate spring 58, the prism holder 37 is elastically depressed by the plate spring 58, and as shown in Fig. 15, the positioning protrusions 56 are engaged with the V grooves 59 of the V groove member 57. Thus, the driven prism 15a is locked by the positioning part 17 so that it is not moved. Further, in the case where there is no abnormality in any optical signals transmitting through the input side optical fibers 18a to 18h, as shown in Fig. 18, the driven prism 15a is in close contact with the oblique surface 26a of the fixed prism 14 at a position away from all the input side optical fibers 18a to 18h and is fixed, and in this state, as already explained (Fig. 7), the respective optical signals emitted from the input side optical fibers 18a to 18h are totally reflected at the oblique surfaces 26a and 26b of the fixed prism 14 and are coupled to the output side optical fibers 19a to 19h.

Now, in case an abnormality occurs in the optical signal transmitting through the input side optical fiber 18g, the electromagnetic actuator 49 is excited by energization. When the electromagnetic actuator 49 is excited, as shown in Fig. 17(b), the movable iron piece 63 is rotated, the pressing protrusion 64 protrudes upward, and the plate spring 58 pressing the prism holder 37 is pushed upward and is separated from the prism holder 37. As a result, the prism holder 37 is raised by the elastic return forces of the support elastic bodies 38, the positioning protrusions 56 are separated from the V groove member 57, and the lock of the prism holder 37 is released. Besides, as shown in Fig. 19, the driven prism 15a attached to the tip of the arm 31 is also separated from the oblique surface 26a of the fixed prism 14. In this state, electric power is applied to the voice coil motor 44 to move the prism holder 37 in the horizontal direction, and the driven prism 15a is moved to the front in the optical axis direction of the input side optical fiber 18g.

Thereafter, when the electromagnetic actuator 49 is de-energized to be returned to the demagnetized state, as shown in Fig. 17(a), since the pressing protrusion 64 of the electromagnetic actuator 49 is again retracted downward, and the plate spring 58 elastically depresses the prism holder 37, as shown in Fig. 15, the positioning protrusions 56 engage with the V grooves 59 of the V groove member 57 to lock the prism holder 37, and as shown in Fig. 20, the driven prism 15a is positioned at the position where evanescent light of the optical signal incident on the oblique surface 26a from the input side optical fiber 18g leaks, and the inclined surface 28 of the driven prism 15a is brought into close contact with the oblique surface 26a of the fixed prism 14 by the elastic force of the arm 31.

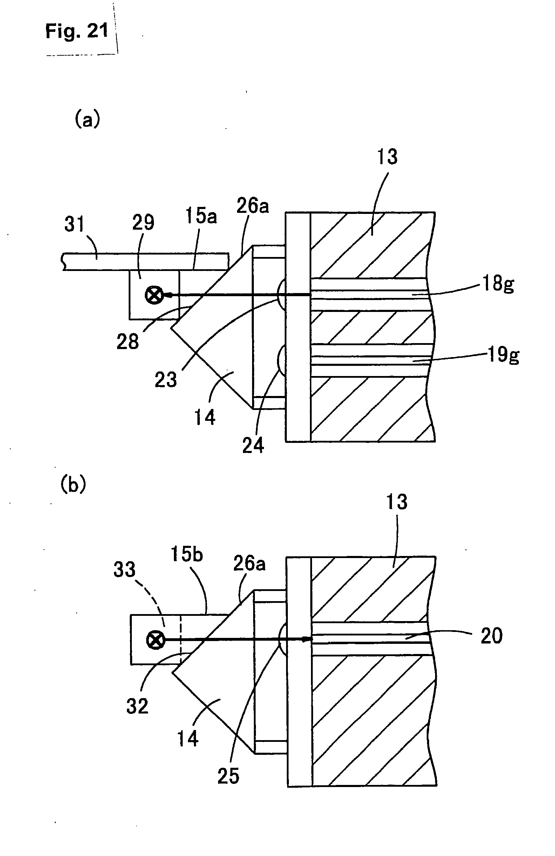

As a result, although the optical signals emitted from the input side optical fibers 18a to 18f and 18h are incident on the output side optical fibers 19a to 19f and 19h similarly as before, as shown in Fig. 20 and Figs. 21 (a) and 21 (b), light emitted from the input side optical fiber 18g passes through the oblique surface 26a of the fixed prism 14, enters the driven prism 15a through the inclined surface 28, and is totally reflected at the reflection surface 29 of the driven prism 15a. The optical signal totally reflected at the reflection surface 29 travels along the longitudinal direction of the fixed prism 14, and is incident on the preliminary optical fiber prism 15b. The optical signal incident on the preliminary optical fiber prism 15b is totally reflected at the reflection surface 33, and then, passes through the inclined surface 32, enters the fixed prism 14 from the oblique surface 26a, passes through the fixed prism 14, and is coupled to the preliminary optical fiber 20. Thus, the abnormality of the optical signal can be checked by connecting the output end of the switched preliminary optical fiber 20 to a measuring instrument or the like.

According to the optical switch 11 as stated above, since the input side optical fibers 18a to 18h and the output side optical fibers 19a to 19h are arranged at the same side, and the fixed prism 14 is used to guide the optical signals from the input side optical fibers 18a to 18h to the output side optical fibers 19a to 19h, the optical path length between the input side optical fibers 18a to 18h and the output side optical fibers 19a to 19h can be made short, the insertion loss of the optical switch 11 can be reduced, and further, the optical switch 11 can be miniaturized.

Besides, since the input side optical fibers 18a to 18h and the output side optical fibers 19a to 19h are arranged in parallel to one another in the same direction, the arrangement of the respective parts in the optical switch becomes easy, and convenience is enhanced also in handling at the time when the optical switch is fitted as a structural part in an equipment. Besides, formation of an array of the optical fibers or lenses becomes easy, and alignment of the optical axes of the respective optical fibers 18a to 18h, 19a to 19h and 20 (or the optical fibers 18a to 18h, and 19a to 19h other than the preliminary optical fiber 20) can be collectively easily performed.

Besides, in the case where an optical signal is extracted from the preliminary optical fiber 20, since the driven prism 15a is moved to the position of the optical signal, and has only to be brought into contact with the oblique surface 26a of the fixed prism 14, the number of structural parts of the optical switch 11 becomes small, and the cost can be made low. Further, the movement stroke of the driven prism 15a by the prism driving part 16 may be several times larger than the diameter of the optical fiber, and it becomes possible to switch optical signals by a small amount of stroke.

Besides, in this optical switch 11, since the displacement resolution of the voice coil motor 44 used as the motive power of the prism driving part 16 is of the order of submicrons, narrowing of the optical fiber bundle can be dealt with. Further, since the response speed of the voice coil motor 44 is several tens kHz, the speed of the optical switch 11 can be raised.

### (Second Embodiment)

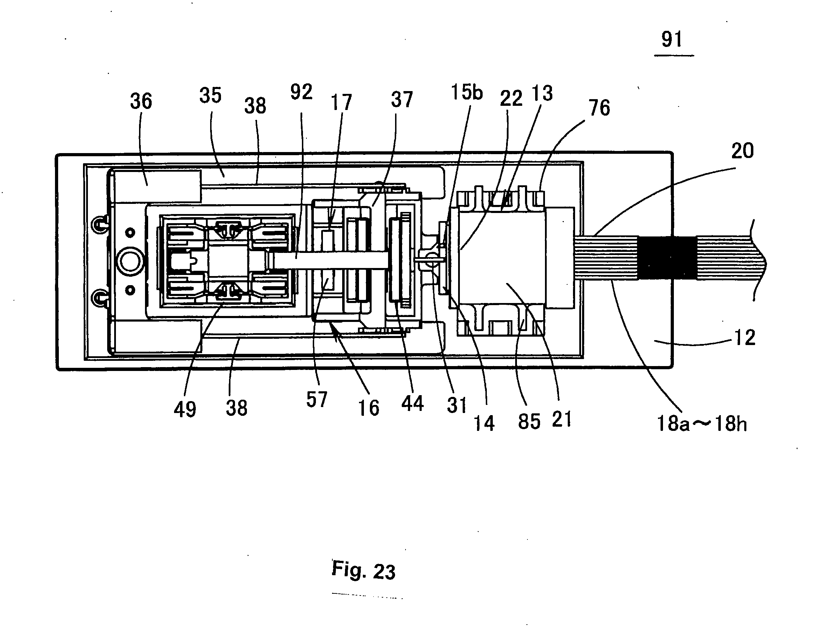

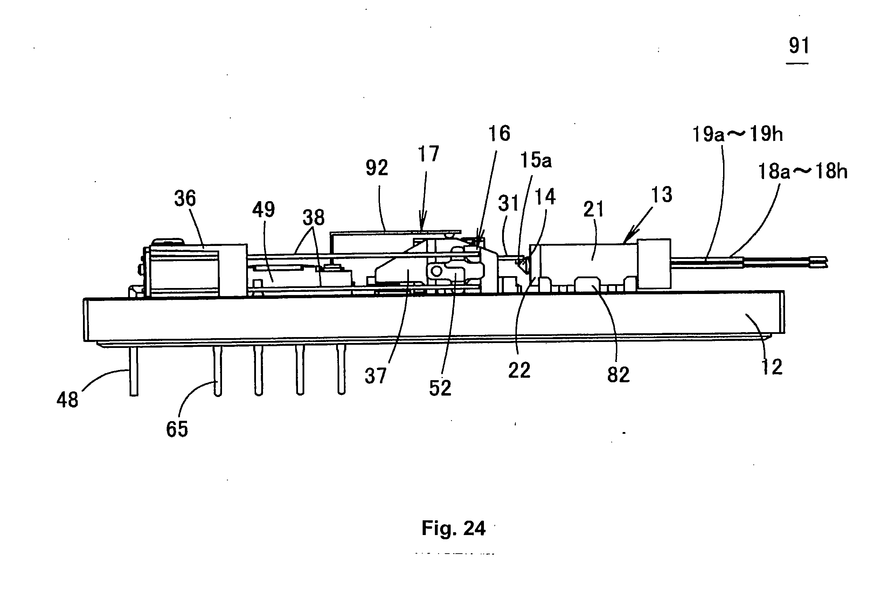

Fig. 22 is a perspective view showing a structure of an optical switch according to another embodiment of the invention, Fig. 23 is a plan view thereof, and Fig. 24 is a side view thereof. Except the structure of a positioning part 17, this optical switch 91 has substantially the same structure as the structure of the optical switch 11 according to the first embodiment. That is, in the positioning part 17 of the optical switch 91, a base end of a plate spring 92 bent like a step is connected to an upper surface of a tip part of a movable iron piece 63 of an electromagnetic actuator 49. A press protrusion 93 to press a prism holder 37 is provided on a lower surface of a tip part of the plate spring 92. The prism holder 37 is directly pressed by the plate spring 92 attached to the movable iron piece 63.

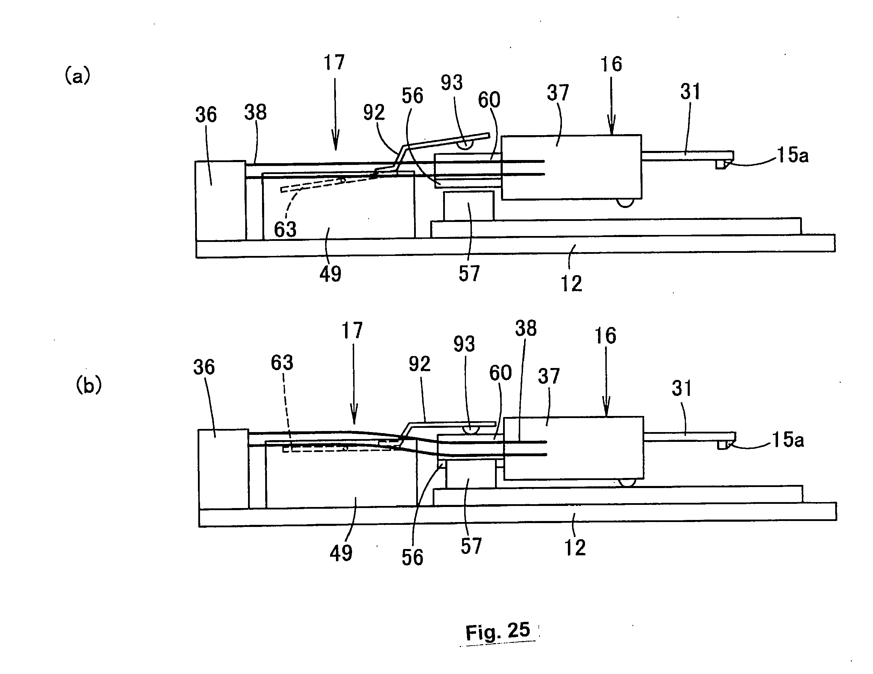

Next, the operation of this optical switch 91 will be described. In the case where the electromagnetic actuator 49 of the positioning part 17 is demagnetized (de-energized state), as shown in Fig. 25(a), the movable iron piece 63 of the electromagnetic actuator 49 is tilted, and the plate spring 92 is raised upward and is separated from the prism holder 37, and therefore, the prism holder 37 is raised by elastic return forces of support elastic bodies 38, and a driven prism 15a attached to the tip of an arm 31 is separated from an oblique surface 26a of a fixed prism 14 (see Fig. 19). Besides, at this time, positioning protrusions 56 are separated from a V groove member 57, and the lock of the prism holder 37 is released.

In the case where there is no abnormality in any optical signals transmitting through input side optical fibers 18a to 18h, as stated above, since the electromagnetic actuator 49 is de-energized, and the driven prism 15a is separated from the fixed prism 14, respective optical signals emitted from the input side optical fibers 18a to 18h are totally reflected at the oblique surfaces 26a and 26b of the fixed prism 14, and are coupled to output side optical fibers 19a to 19h (see Fig. 7).

Now, in case an abnormality occurs in the optical signal transmitting through the input side optical fiber 18g, the voice coil motor 44 is energized, the prism holder 37 is moved in the horizontal direction, and the driven prism 15a is moved to the front in the optical axis direction of the input side optical fiber 18g. Next, when the electromagnetic actuator 49 is excited by energization, as shown in Fig. 25(b), the movable iron core 63 is rotated, the plate spring 92 is lowered, the prism holder 37 is elastically depressed by the press protrusion 93 of the tip part. When the prism holder 37 is depressed, the positioning protrusions 56 engage with the V grooves 59 of the V groove member 57 (see Fig. 15), the prism holder 37 is locked, the driven prism 15a is positioned at the position where evanescent light of the optical signal incident on the oblique surface 26a from the input side optical fiber 18g leaks, and the inclined surface 28 of the driven prism 15a is brought into close contact with the oblique surface 26a of the fixed prism 14 by the elastic force of the arm 31 (see Fig. 20).

As a result, although the optical signals emitted from the input side optical fibers 18a to 18f and 18h are incident on the output side optical fibers 19a to 19f and 19h similarly as before, light emitted from the input side optical fiber 18g passes through the oblique surface 26a of the fixed prism 14, enters the driven prism 15a from the inclined surface 28, and is totally reflected by the reflection surface 29 of the driven prism 15a. The optical signal totally reflected at the reflection surface 29 travels along the longitudinal direction of the fixed prism 14, and is incident on the preliminary optical fiber prism 15b. The optical signal incident on the preliminary optical fiber prism 15b is totally reflected at the reflection surface 33, passes through the inclined surface 32, enters the fixed prism 14 from the oblique surface 26a, passes through the fixed prism 14, and is coupled to the preliminary optical fiber 20 (see Fig. 20 and Figs. 21(a) and 21(b)). Thus, the abnormality of the optical signal can be checked by connecting the output end of the switched preliminary optical fiber 20 to a measuring instrument or the like.

Besides, after the abnormality of the optical signal is resolved, when the electromagnetic actuator 49 is de-energized, the driven prism 15a is separated from the fixed prism 14 and is returned to the original state.

Also by the optical switch 91 as stated above, the same operation and effect as the optical switch 11 of the first embodiment are obtained. However, between both the optical switches 91 and 11, there is a following difference due to the difference in the structure of the positioning part 17. That is, in the second embodiment, since the plate spring 92 is directly attached to the electromagnetic actuator 49, the structure and assembly of the optical switch 91 becomes simple. On the other hand, when the output destination of the optical signal is being switched to the preliminary optical fiber 20, since the electromagnetic actuator 49 has to be always energized, power consumption occurs.

On the other hand, in the first embodiment, since the plate spring 58 is attached to the damper holder 36 and the plate spring 58 is moved by the movable iron piece 63 of the electromagnetic actuator 49, the structure becomes slightly complicated, and the labor of assembly is also increased. However, the electromagnetic actuator 49 and the voice coil motor 44 are energized only at the time of movement of the driven prism 15a, and it is not necessary to energize the electromagnetic actuator 49 and the voice coil motor 44 at the time when there is no abnormality in the optical signals and in the case where the optical signal is being switched to the preliminary optical fiber 20, and therefore, power consumption can be eliminated.

Besides, also in the second embodiment, when it is designed such that when the electromagnetic actuator 49 is de-energized, as shown in Fig. 25(b), the plate spring 92 is lowered to press the prism holder 37, and when the electromagnetic actuator 49 is energized, as shown in Fig. 25 (a), the plate spring 92 is raised to release the prism holder 37, de-energization can be made to occur in the state where the optical signal is extracted to the preliminary optical fiber 20 (at the normal time, similarly to the first embodiment, the driven prism 15a is moved to a position away from the input side optical fibers 18a to 18h). However, in the second embodiment, in the case where the prism holder 37 is pressed by the plate spring 92 in this way at the time of de-energization, and the prism holder 37 and the driven prism 15a are fixed, there is a possibility that the press force by the electromagnetic actuator 49 and the forced position vary. In the first embodiment, such fear can be reduced.

Besides, in another embodiment of the invention, although not shown, it may be designed such that a preliminary optical fiber prism 15b and a preliminary optical fiber prism 15b are made to come in vertical contact with an oblique surface 26b (oblique surface at the side of output side optical fibers) of a fixed prism 14, light emitted from an input side optical fiber is totally reflected at an oblique surface 26a of the fixed prism 14, and then is incident on the driven prism 15a, and light entering the fixed prism 14 from the preliminary optical fiber prism 15b is totally reflected, and then is incident on a preliminary optical fiber 20.

Besides, the preliminary optical fiber 20 may be arranged in parallel to the output side optical fibers 19a to 19h. In the case where the preliminary optical fiber 20 is arranged in parallel to the output side optical fibers 19a to 19h, the direction of the reflection surface of the driven prism 15a or the preliminary optical fiber prism 15b has only to be changed accordingly. For example, light emitted from the input side optical fiber 18g is made incident into the driven prism 15a, the light is reflected at the reflection surface 29 to the direction parallel to the fixed prism 14, and is made incident into the preliminary optical fiber prism 15b. Then, the light is reflected downward by the reflection surface 33 (the direction of this reflection surface is changed) of the preliminary fiber prism 15b, and is made incident into the fixed prism 14, is totally reflected at the oblique surface 26b of the fixed prism 14, and is made incident on the preliminary optical fiber 20.

## Claims

1. An optical switch comprising:
plural input side optical transmission paths to emit optical signals from one ends;
plural output side optical transmission paths on one ends of which the optical signals can be made incident;
a preliminary optical transmission path on one end of which an optical signal can be made incident;
a prism to totally reflect the optical signals emitted from the input side optical transmission paths and to guide them to the output side optical transmission paths;
an optical element, when coming in contact with an interface of the prism, to extract an optical signal, which was totally reflected at the interface of the prism, by allowing the optical signal to pass through the interface;
means for guiding the optical signal extracted by the optical element to the preliminary optical transmission path; and
optical element position control means for moving the optical element between each position where it comes in contact with part of the interface of the prism at which light emitted from the input side optical transmission path is totally reflected and a position away from any position where it comes in contact with part of the interface of the prism at which the light emitted from the input side optical transmission path is totally reflected.

2. The optical switch according to claim 1, **characterized in that** the means for guiding the optical signal from the optical element to the preliminary optical transmission path includes a first light reflection surface provided on the optical element, an auxiliary optical element that is in contact with the interface of the prism, allows the optical signal to pass through the interface of the prism to make the optical signal incident on the prism, and makes the optical signal incident on the preliminary optical transmission path, and a second light reflection surface that is provided on the auxiliary optical element, receives the optical signal reflected by the first light reflection surface, and deflects it to an incident direction to the prism.

3. The optical switch according to claim 1, **characterized in that** end parts of the plural input side optical transmission paths, the plural output side optical transmission paths, and the preliminary optical transmission path are arranged in parallel to one another, end surfaces of the input side optical transmission paths are made opposite to one oblique surface of the prism, end surfaces of the output side optical transmission paths are made opposite to the other oblique surface of the prism,
at a place where the optical element is not in contact with the interface, the optical signal emitted from the input side optical transmission path is totally reflected at the two oblique surfaces of the prism, and then is incident on the output side optical transmission path.

4. The optical switch according to claim 1, **characterized in that** the optical element position control means includes means for causing the optical element to come in contact with or to separate from the interface of the prism and means for moving the optical element along an arrangement direction of the input side optical transmission paths.

5. The optical switch according to claim 1, **characterized in that** the optical element position control means includes means for moving the optical element along an arrangement direction of the input side optical transmission paths, and
further includes positioning means for positioning the optical element at each position where it comes in contact with part of the interface of the prism at which the light emitted from the input side optical transmission path is totally reflected.

6. The optical switch according to claim 5, **characterized in that** the positioning means includes an actuator to switch the optical element between a positioning state and a release state, and
the actuator releases the optical element from the positioning state in an energized state, and brings the optical element into the positioning state in a de-energized state.

7. The optical switch according to claim 1, **characterized in that** the optical element position control means uses a linear motion voice coil motor as its motive power.
